Europäisches Patentamt

European Patent Office

Office européen des brevets

(11) Publication number: **0 243 782**
**A2**

# (12) EUROPEAN PATENT APPLICATION

(21) Application number: **87105482.1**

(22) Date of filing: **13.04.87**

(51) Int. Cl.4: **G06F 3/023**

(30) Priority: **02.05.86 JP 100986/86**

(43) Date of publication of application:
**04.11.87 Bulletin 87/45**

(84) Designated Contracting States:
**DE GB SE**

(71) Applicant: **HITACHI, LTD.**
**6, Kanda Surugadai 4-chome**
**Chiyoda-ku Tokyo 101(JP)**

Applicant: **NIPPON METAL INDUSTRY
CO.,LTD.**
**2-1 Nishishinjuku 2-chome**
**Shinjuku-ku Tokyo(JP)**

(72) Inventor: **Okamoto, Hiroyuki**
**1-7, Kamiyabe-2-chome**
**Sagamihara-shi(JP)**
Inventor: **Nagase, Hidenori**
**8-14, Makigahara Asahi-ku**
**Yokohama(JP)**
Inventor: **Kamigane, Yoshihiro**
**15-17, Osecho-3-chome**
**Hitachi-shi(JP)**
Inventor: **Kawase, Hiroshi**
**33-2, Nishinarusawacho-1-chome**
**Hitachi-shi(JP)**
Inventor: **Sakurai, Takakazu**
**2106-5, Motoyoshidacho**
**Mito-shi(JP)**

(74) Representative: **Strehl, Schübel-Hopf,
Groening, Schulz**
**Widenmayerstrasse 17 Postfach 22 03 45**
**D-8000 München 22(DE)**

(54) Operation control desk.

(57) An operation control desk (II) operates a plurality of units (I5, I5') to be controlled by using a CRT unit (I6) without resort to additional operation control desks. The same operation switch (23) is used to function differently in compliance with the units (I5, I5') to be controlled. A push-button switch is used as the operation switch (23), the CRT unit (I6) is provided for displaying a function of the push-button switch, and a function name picture of the push-button switch is displayed on a screen (22) of the CRT unit (I6). The function of the push-button switch once set for an object to be controlled is automatically changed as necessary to a function for another object to be controlled. The operation control desk is standardized in configuration independently of the kind of the objects to be controlled and is multifunctional, thus ensuring space reduction and cost reduction.

F I G. 4

| SCREW DOWN | S / G | SPEED | LOOPER | SPRAY |
|---|---|---|---|---|
| 2-NOTCH ASCENT | 2-NOTCH OPEN | ACCEL-ERATION | | DIS-CHARGE |
| 1-NOTCH ASCENT | 1-NOTCH OPEN | DECEL-ERATION | UPWARD | STOP |
| STOP | STOP | HOLD | STOP | |
| 1-NOTCH DESCENT | 1-NOTCH OPEN | STOP | DOWN-WARD | |
| 2-NOTCH DESCENT | 2-NOTCH OPEN | START | | |

SCREEN NO.5

la.

## OPERATION CONTROL DESK

## BACKGROUND OF THE INVENTION

### FIELD OF THE INVENTION

This invention relates to an operation control desk and more particularly to an operation control desk using a cathode ray tube (CRT) display unit which is suitable for operating a plurality of objects to be controlled without resort to additional operation control desks.

### DESCRIPTION OF THE PRIOR ART

Conventionally, a plurality of operation desks each connected with a plurality of units to be controlled are employed as exemplified in Fig. I wherein $m$ controllable units $2A_1$, $2A_2$, ..., $2A_m$ are controlled by an operation desk IA and $\ell$ controllable units $2N_1$, ..., $2N_\ell$ are I5 controlled by an operation desk IN.

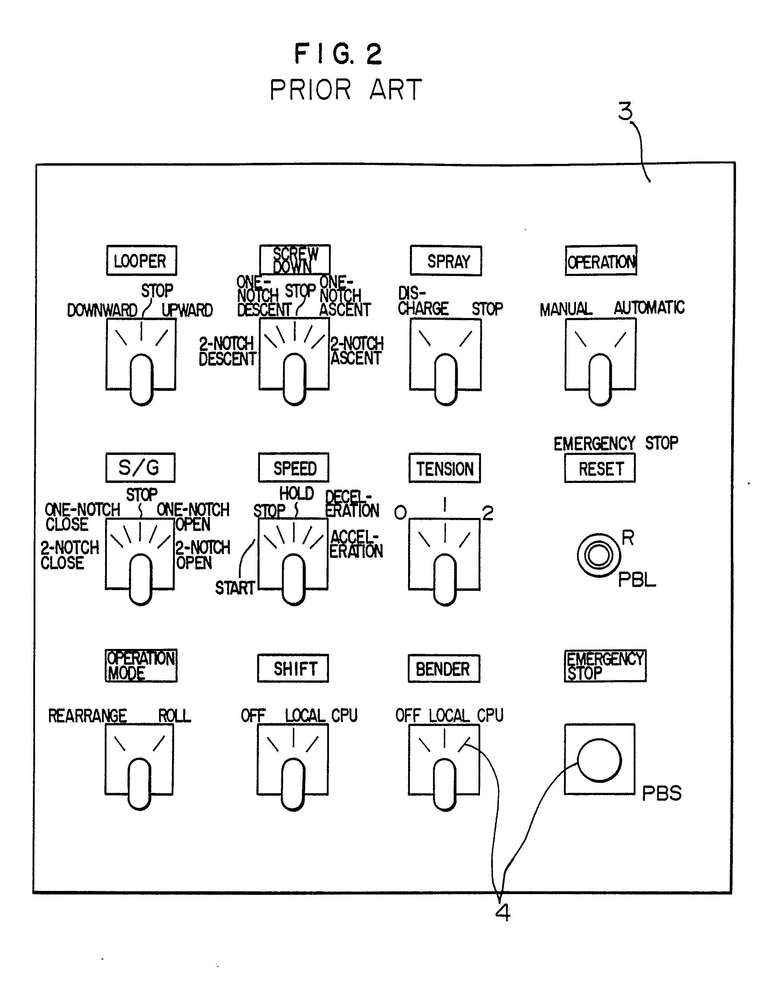

Fig. 2 illustrates a plurality of operation switches 4 respectively dedicated to the plurality of units to be controlled, and the operation switches are located on a control panel 3 of each of the operation desks IA, ..., IN shown in Fig. I. In the prior art, the plurality of operation desks IA, ..., IN are provided in this manner to comply with application purposes.

For example, JP-A-55-94503 discloses another type of control panel utilizing a rotary type operation switch which is switchable to desired objects to be controlled. Disadvantageously, the switching in this control panel is limited to about three stages at the most.

Accordingly, in the prior art examples, the number and the layout of the operation switches must be changed to comply with individual units to be controlled and the configuration of the operation desk is very difficult to standardize and inevitably specified for individual units.

When taking control of a hot-rolling mill used for rolling a metal material, for instance, an operation desk for a tandem finishing rolling mill (continuous type rolling mill) is associated with a variety of objects to be controlled including:

(I) the speed control of a rolling mill;

(2) a looper for raising a metal strip extending over the place between the mills and for supporting the metal strip by tension and consequently for acting as a shock absorber of the metal strip and the mills.

(3) an inlet guide for controlling the metal strip such that the metal strip does not get derailed at the entrance to the rolling mill; and

(4) an outlet guide for controlling the metal strip such that the metal strip does not get derailed at the exit from the rolling mill. Consequently, a great number of operation switches 4, amounting to about 500, are required for controlling the units (I) to (4).

A coiler for winding up a rolled sheet worked out by a finishing rolling mill in the final phase is associated with objects to be controlled including:

(5) a mandrel;

(6) a pinch roller; and

(7) a wrapper roll and a great number of operation switches, amounting to about 300, are required for controlling the units (5) to (7).

As will be seen from the above, the number of operation switches required differs and the operation switches work differently, depending on the types of units to be controlled and therefore there is involved a problem that a plurality of operation desks have to be employed which are respectively provided with a plurality of operation switches dedicated to individual controllable objects.

### SUMMARY OF THE INVENTION

A main object of this invention is to provide a multi-functional operation control desk of a standardized configuration which is compatible with a plurality of objects to be controlled, contributing to layout space reduction and cost reduction.

Another object of this invention is to facilitate control of objects to be controlled by using a single operation control desk in a multi-functional mode in which one function can be automatically switched to another by using various automating signals.

According to the present invention. to accomplish the above objects, the same operation switch is used to function differently in compliance with units to be controlled.

Specifically, a push-button switch is used as the operation switch, a CRT unit is provided for displaying a function of the push-button switch, and a function name picture of the push-button switch is displayed on the CRT screen.

The function of the push-button switch and the function name picture on the CRT screen can both be switched or changed using ten keys as CRT picture change operation switches. Depending on a state or condition of an object to be controlled, the function of the push-button switch once set for that object can automatically be switched to a function complying with another object to be controlled.

The CRT unit of the general-purpose operation control desk according to the present invention can display, for example, function name pictures corresponding to 25 push-button switches arranged in matrix of 5 rows and 5 columns. Thus, the function of each push-button switch once set for one control purpose can be displayed on the CRT screen and as necessary, can be switched to another function for another control purpose and displayed on the CRT screen.

## BRIEF DESCRIPTION OF THE DRAWINGS

Preferred embodiments of the present invention will now be described in conjunction with the accompanying drawings, in which:

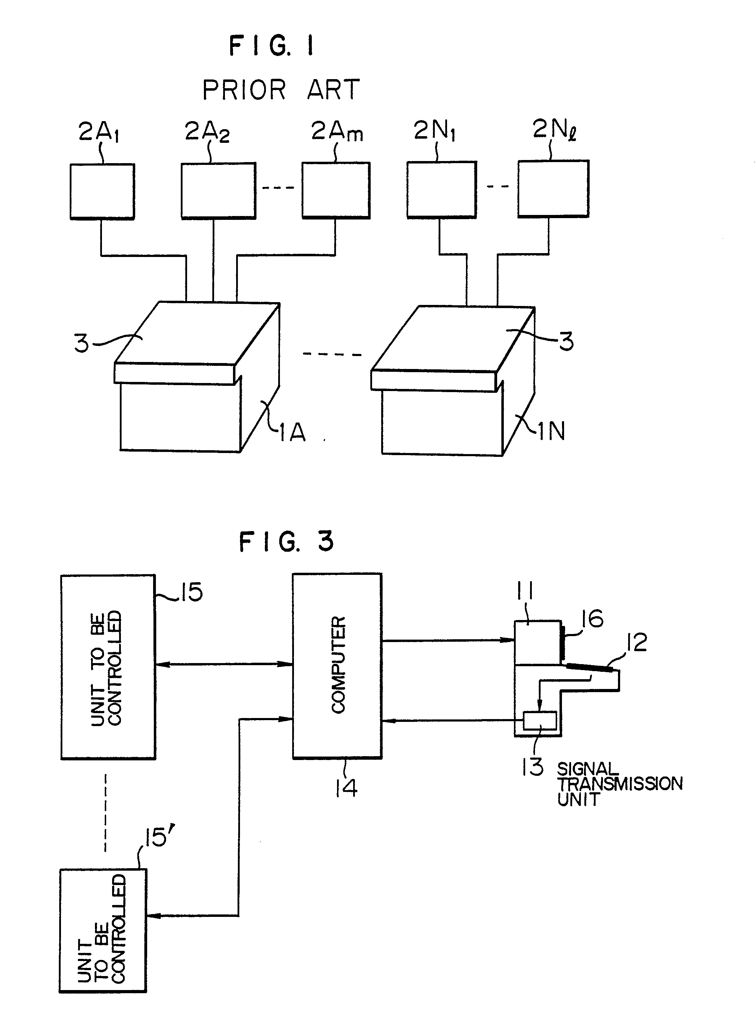

Figure 1 is a diagram illustrating prior art operation control desks each associated with a plurality of units to be controlled;

Figure 2 is a plan view showing a control panel of the operation control desk shown in Fig. I;

Figure 3 is a diagram illustrating an operation control desk associated with a plurality of units to be controlled in accordance with the invention;

Figure 4 is a perspective view showing the exterior appearance of the operation control desk of Fig. 3;

Figure 5 is a flow chart for explaining a first operation mode of the operation control desk according to the invention;

Figure 6 is a diagram for explaining the principle of a scrolling mode of the operation control desk according to the invention;

Figure 7 is a flow chart for explaining a second operation mode of the operation control desk according to the invention;

Figure 8A is a flow chart for explaining a third operation mode of the operation control desk according to the invention;

Figure 8B is a diagram for explaining character information memory patterns used in the third operation mode; and

Figure 9 is a perspective view illustrating a set of operation control desks according to the invention for use with a rolling mill.

## DESCRIPTION OF THE PREFERRED EMBODIMENTS

The invention will now be described in greater detail by referring to an operation control desk embodying the invention.

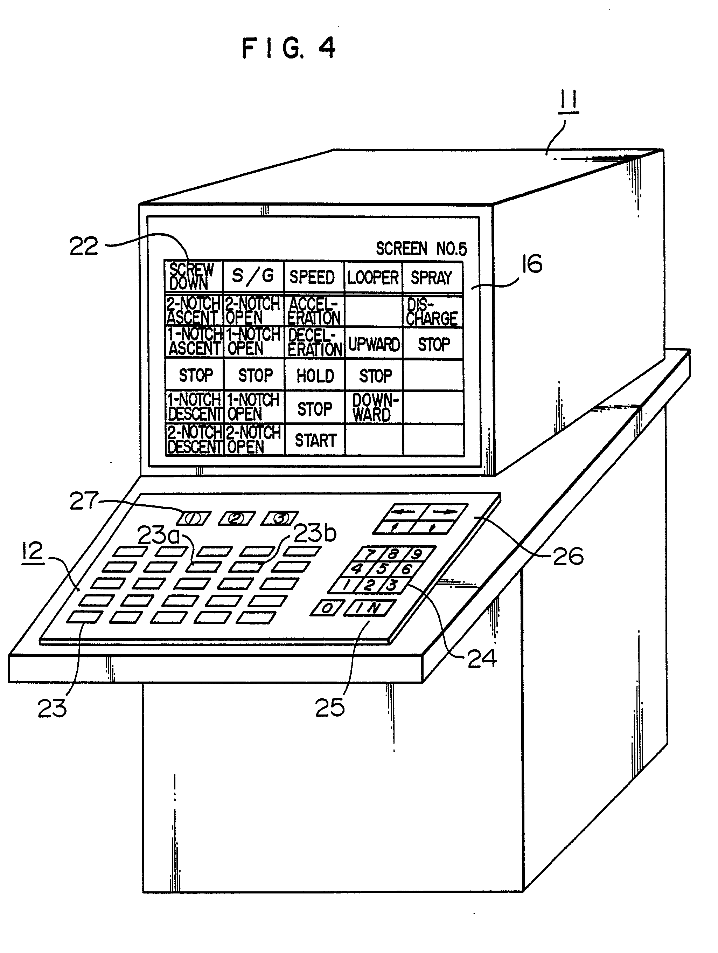

The operation control desk is associated with a plurality of units to be controlled as shown in Fig. 3.

Referring to Fig. 3, the operation control desk as designated by reference numeral II has an operation switch board or control panel I2 on which push-button switches and the like are situated. Signals from CRT display change selecting switches and a signal from a push-button switch are fetched by a signal transmission unit I3 and then sent to a computer I4. The computer I4 extracts from the signals sent thereto the signal from the push-button switch to deliver a control signal to specified one of the plurality of controllable units I5, I5' while recognizing the CRT display change signals, and sets a display on the screen of a CRT unit I6 mounted on the operation control desk II and a function of the push-button switch is accordance with the inputted signals.

A rolling mill, a generator (of heat power, water power or atomic power) and a water treatment plant stand for the unit to be controlled.

The operation control desk II of the invention shown in Fig. 3 has an exterior appearance as illustrated in Fig. 4.

Referring to Fig. 4, the CRT display unit I6 has a display screen 22 and the desk II has operation switches (or operation levers) 23 in the form of push-button switches, ten keys 24 indicative of "0" to "9", a screen change selecting switch 25 indicative of "IN", scroll keys 26 indicative of "←", "→", "↑" and " " and mode selection keys 27 indicative of " ① ", " ② " and " ③ ".

When a screen is selected by the screen change selecting switch 25, push-button switches 23 corresponding to displayed pictures are operated to effect predetermined operations. For example, by operating a push-button switch 23a, an operation "acceleration" can be carried out and by operating a push-button switch 23b, an operation "raising looper" can be carried out. When the screen is switched to another screen, the pictures displayed on the renewed screen are also changed to new ones and functions of the push-button switches 23a and 23b change to those represented by the renewed pictures.

When a scheduled screen change can be completed, color of the screen is changed or the push-button switches standing for the operation switches are turned on in order to obtain operational confirmation.

The processing steps by the computer I4 of the operation control desk II according to the invention will now be described by taking a hot-rolling mill for the unit I5 to be controlled.

As shown in Fig. 4, the CRT unit I6 is mounted on the top of a console of the operation control desk II. In front of the CRT unit I6, there are located the push-button switches 23, for example, 25 in total number, arranged in matrix of 5 rows and 5 columns, ten keys 24, screen change switch 25, scroll keys 26 and mode selection keys 27.

The 25 push-button switches 23 have functions as indicated by pictures displayed on the screen 22 of CRT unit I6. More particularly, beginning with the left, the first column represents "screw down" with upper to lower rows representing "2-notch ascent", "one-notch ascent", "stop", "one-notch descent" and "2-notch descent", respectively, the second column represents "side/guide" and the third column represents "speed". On the right above corner of the screen 22 of CRT unit I6, "No. 5" is displayed to indicate the contents currently displayed on the screen.

The present invention features that the individual push-button switches 23 are allowed to have multiple functions by changing the screen 22 on the CRT unit I6 in three manners as described below.

(I) Functions of the push-button switches 23 are determined column by column and the contents of each column are changed by scrolling.

(2) Functions of the push-button switches 23 are selected and changed switch by switch.

(3) Functions of the 25 push-button switches 23 are collectively determined.

The three kinds of determination and change methods can be selectively changed by operating the mode selection keys 27 in Fig. 4 of which " ① ", " ② " and " ③ " may exemplarily correspond to the above methods (I), (2) and (3), respectively.

Firstly, the change method (I) by scrolling will be described. The scrolling is classified into four types, upward scroll, downward scroll, rightward scroll and leftward scroll. The contents of these types of scrolling will be explained by referring to the screen 22 of CRT unit I6 shown in Fig. 4. Push-button switches 23 in each column are subjected to the upward scroll and downward scroll independently of push-button switches 23 in the other columns. In explaining the upward scroll by way of the first column indicative of "screw down", the sixth row indicative of "2-notch ascent" is shifted to the fifth row, the fifth row indicative of "one-notch descent" is shifted to the fourth row, the fourth row indicative of "stop" is shifted to the third row, the third row indicative of "one-notch ascent" is shifted to the second row, and the second row indicative of "2-notch ascent" is shifted to the sixth row.

The downward scroll is converse to the upward scroll, with the second row indicative of "2-notch ascent" shifted to the third row, the third row indicative of "one-notch ascent" shifted to the fourth row, ..., and the sixth row indicative of "2-notch descent" shifted to the second row.

The rightward scroll is for sequentially shifting columns to the right with the arrangement of rows in each column unchanged.

Thus, beginning with the left, "screw down", "2-notch ascent", "one-notch ascent", "stop", "one-notch descent" and "2-notch descent" in the first column are shifted to the second column, "side/guide", "2-notch open", "one-notch open", "stop", "one-notch close" and "2-notch close" in the second column are shifted to the third column, and in a similar way, the contents of the fifth column are shifted to the first column.

The leftward scroll is converse to the rightward scroll for sequentially shifting columns to the left, with the contents of the fifth column shifted to the fourth column, the contents of the fourth column shifted to the third column, ..., and the contents of the first column shifted to the fifth column.

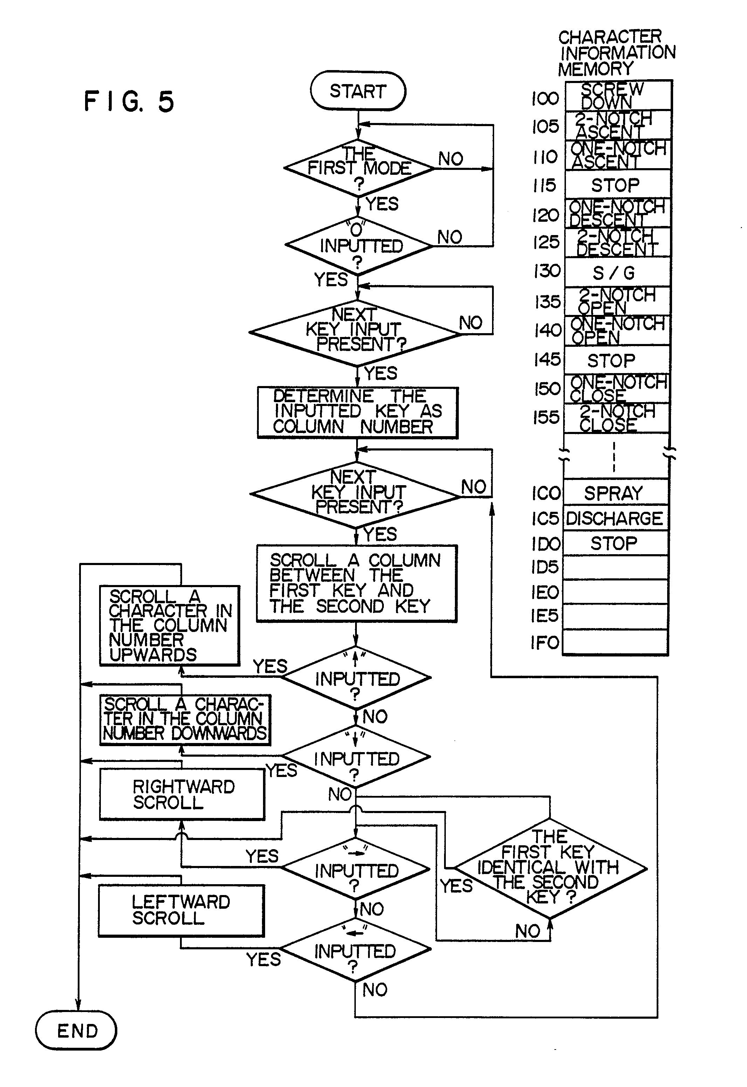

The change method (I) by scrolling, that is, the first mode of the operation control desk of this invention may be implemented as will be described below with reference to a flow chart of Fig. 5.

In the flow chart of Fig. 5, the mode selection key 27 indicative of " ① " is first depressed to designate the first mode of the operation control desk. Subsequently, the contents of each column are determined as follows. For example, to make the first column represent "screw down", keys 24 are operated to issue "0", "I", "I". The leading "0" indicates that the display should be changed, the following "I" indicates the first column and the trailing "I" indicates that an address I00 for "screw down" in the intial frame of the character information memory should be designated. The computer I4 recognizes the key input "0", "I", "I" and sets the character information memory. The computer may further execute the four types of scrolling in accordance with the flow chart of Fig. 5.

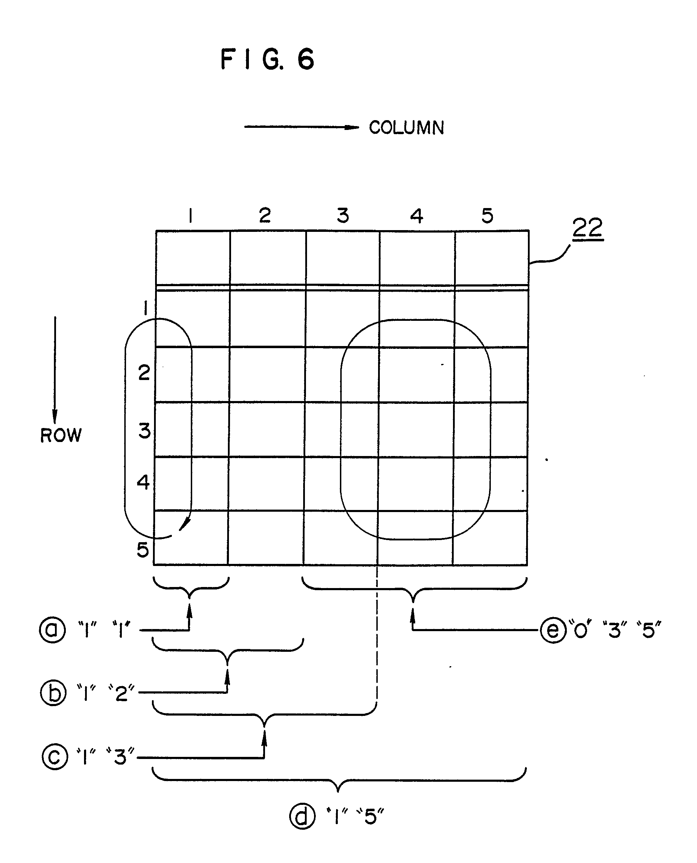

In principle, the scrolling is effected on the screen 22 of the CRT unit I6 as will be described with reference to Fig. 6.

For example, the upward scroll in the first column is effected with "0", "I", "I" of the keys 24. For the rightward scroll and the leftward scroll, a desired value can be inputted to follow the leading "0".

In the previous example, the key input "0", "I", "I" is assumed to define the display of the first column but if the computer I4 is so programed as to recognize that the input following the leading "0" is defined to indicate a row number, then push-button switches on the first row will obviously be used to represent "screw down" with "0", "I", "I" of the keys 24.

In accordance with the trailing third digit, various kinds of contents can be indicated as follows:

ⓐ "0", "I", "I" ..... only the first column is treated.

ⓑ "0", "I", "2" ..... only the first and second columns are treated.

ⓒ "0", "I", "3" ..... only the first, second and third columns are treated.

ⓓ "0", "I", "5" ..... the first to fifth columns are treated.

ⓔ "0", "3", "5" ..... only the third to fifth columns are treated.

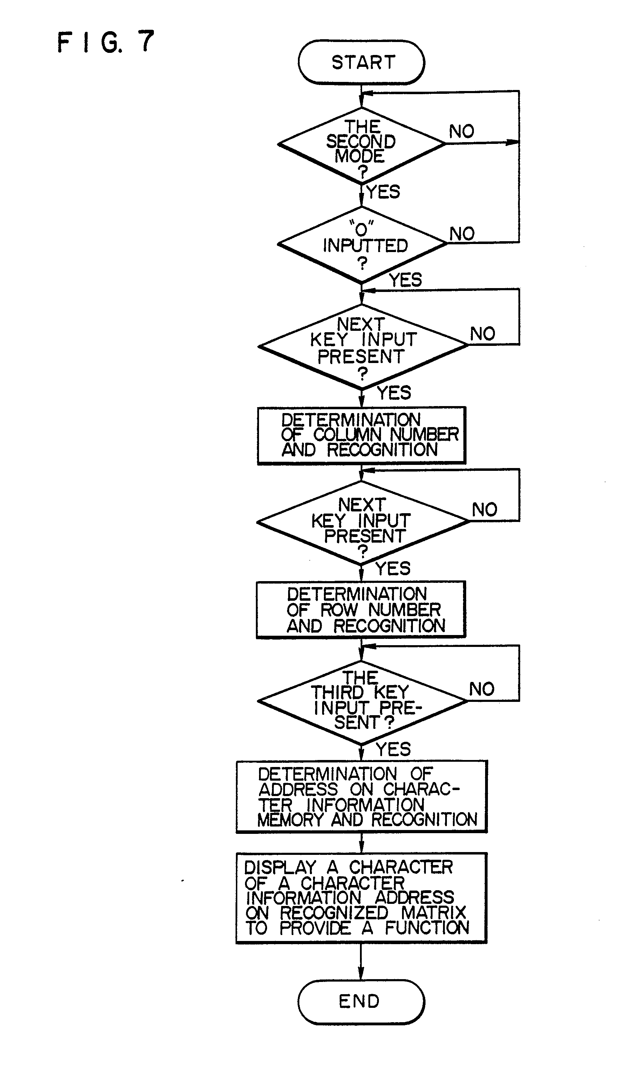

Next, the second change method (2) wherein functions of the push-button switches 23 are selected and changed switch by switch, that is, the second mode of the operation control desk of this invention will be explained with reference to a flow chart of Fig. 7.

In the Fig. 7 flow chart, the mode selection key 27 indicative of " ② " is depressed, as in the case of the previous first change method (I), to designate the second mode of the operation control desk, which is processed by the computer I4 shown in Fig. 3.

The character information memory has the same structure for the previous and present methods. The oleration procedure is as follows. For example, to define the first row indicative of "2-notch open" in the first column representing "side/guide", "0", "I", "I", "I", "3", "5" of the keys 24 are operated.

The leading "0" indicates that the function of the push-button switches should be changed, the following "I" indicates the first column and the ensuing "I" indicates the first row. The trailing three digits indicate an address on the character information memory. Specifically, an address I35 indicates the head address for "2-notch open" in the "side/guide".

Finally, the third change method (3) will be described wherein functions of all the push-button switches are collectively changed.

In this third method, functions of the set of push-button switches 23 are determined for each of the objects to be controlled and recorded in the character information memory in advance, and the functions of the set of the push-button switches 23 determined for each object are represented by a screen number which makes one-to-one correspondence to an address on the character information memory.

This third method differs from the two methods previously described in that functions of all the push-button switches are determined by one operation for keying-in a screen number.

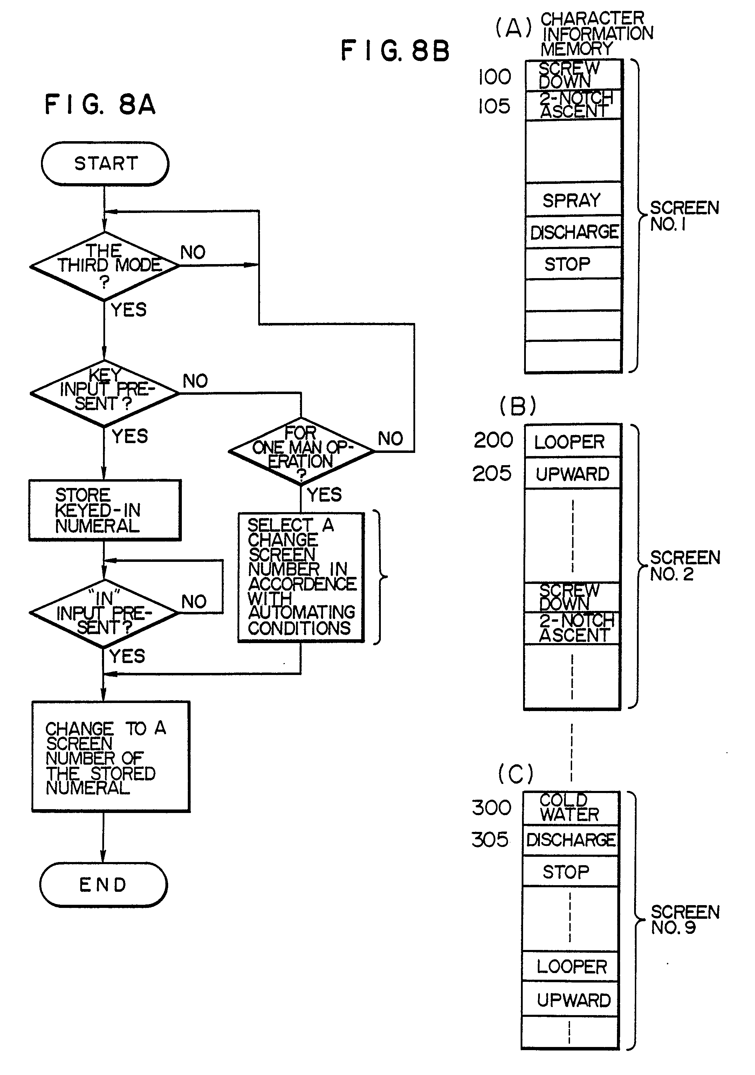

Fig. 8A is a flow chart useful in explaining the third mode of the operation control desk of the present invention, and Fig. 8B illustrates in sections (A) through (C) patterns in the character information memory which are used for the third mode.

To implement the third mode, the character information memory has patterns as shown at sections (A), (B) and (C) in Fig. 8B, the number of the patterns being equal to the number of screens. To explain by way of screen No. I, an address I00 indicates that the push-button switches on the first column function for "screw down" and an address I05 indicates that the push-button switch at the first row in the first column is for "2-notch ascent" under "screw down". In a similar manner, functions of the push-button switches at the second row, third row, ... in the first column are determined. Screens numbering I to 9 are registered.

One of screen No. I to screen No. 9 is selected through key operation.

For example, screen No. I can be selected by operating the key 24 of "I" and the screen change selection switch 25 indicative of "IN". The leading "I" indicates screen No. I and the following "IN" indicates completion of pattern selection.

In the third mode, the object to be controlled changes simultaneously with the change of the screen. Exemplarily, a controllable object expected to be used frequently should therefore be registered for screens of all numbers to ensure control of that object even when the screen changes.

Preferrably, the screen can be changed automatically by using a signal indicative of a change in condition of the object to be controlled. This ensures that functions of push-button switches for suitable operations can be selected without requiring the operator to manually change the screen, thereby greatly reducing the time for the operator to engage himself in the apparatus.

Where the operation control desk of the present invention is used for a rolling mill, various screens for a variety of machines or units to be controlled are called up by designating the corresponding screen numbers.

The arrangement of pictures in the called-up screen is predeterminedly set for each machine to be controlled and hence the user has to rearrange the pictures, as necessary. To this end, the scrolling and/or the selective change of the function of individual push-button switches is practiced.

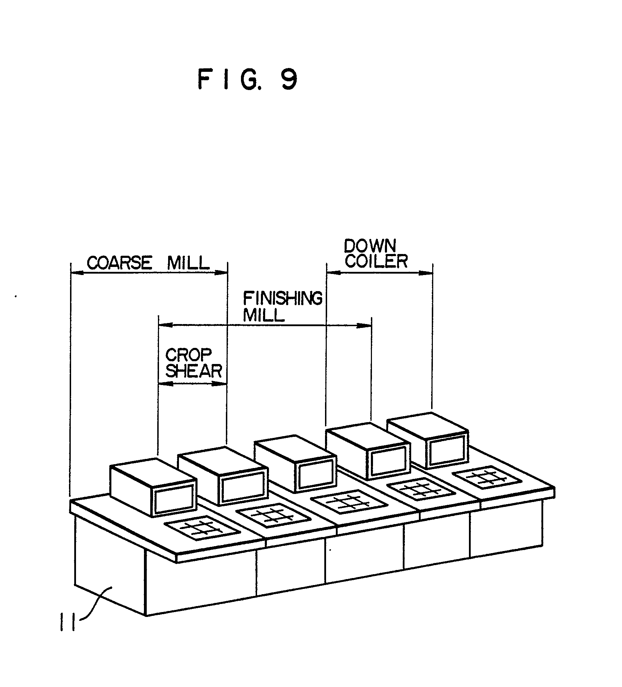

Practically, in an application to a rolling mill, a plurality of operation control desks of the invention are installed in accordance with a layout as shown in Fig. 9.

The rolling mill consists of a roughing mill, a crop shear, a finishing mill and a down coiler.

It has been practice to operate the rolling mill with operation desks respectively dedicated to the coarse mill by incorporating about 300 operation switches, to the crop shear by incorporating about l50 operation switches, to the finishing mill by incorporating about 400 operation switches and to the down coiler by incorporating about 300 operation switches, the set of the operation desks being of a very large scale.

On the contrary, according to the invention, the five operation control desks incorporating only l25 push-button switches in total for direct control of the machines can operate and control the rolling mill.

Especially, beginning with the left, the second operation control desk according to the invention serves by itself for the three machines, that is, the coarse mill, crop shear and finishing mill, thus greatly contributing to space reduction.

During rolling by means of the coarse mill, two operation control desks, beginning with the left, serve for the coarse will and after completion of the rolling by the coarse mill, the second operation control desk, beginning with the left, serves for the crop shear. After completion of the crop shear operation, three intermediate operation desks serve for the finishing mill. Further, during winding-up by means of the down coiler, two operation control desks, beginning with the right, serve for the down coiler.

In this manner, functions of the operation control desks in one console can be changed purposely and a compact and easy-to-use operation control desk console can be materialized.

Preferably, the operation control desk presently serving for the finishing mill or the coarse mill may be automatically switched to serve for the crop shear by a signal indicative of completion of rolling or a change in state of rolling, for example, completion of coarse rolling. This facilitates the operator to decide and control the operation. Further, the function of the operation control desk can be automatically changed to comply with urgent operations for, for example, looper, screw down and speed, thereby making it possible to realize a one-man-operation system.

As has been described, according to the present invention, the following beneficial effects can be attained.

l. The multi-functional operation control desk standardized in configuration independently of the kind of the units to be controlled can be used to realize space reduction and cost reduction.

2. The function of individual control operation desks can be changed by using automating signals to comply with operations required for individual objects to be controlled.

## Claims

l. An operation control desk (ll) having a plurality of operation switches (23) which are selectively operated to control a plurality of controllable units (l5, l5′) through a computer (l4), said control desk comprising:

a control panel (l2) on which said plurality of operation switches (23) are arranged in a pattern;

display means (l6) for displaying on its screen pictures representative of functions of individual operation switches (23) in a pattern corresponding to the pattern of the arrangement of said operation switches; and

means (24, 25, 26, 27), provided on part of said control panel (l2), for selectively changing the screen of said display means and pictures displayed thereon and making operation switches (23) corresponding to the changed pictures perform functions represented by said changed pictures.

2. An operation control desk according to Claim l wherein said display means comprises a CRT unit (l6).

3. An operation control desk according to Claim l wherein said selectively changing means comprises scroll means (26) for selective scrolling of the display pictures.

4. An operation control desk according to Claim l wherein said selectively changing means comprises ten keys (24), a screen change selection switch (25), scroll keys (26) and mode selection keys (27).

5. An operation control desk according to Claim l wherein said screen and pictures are automatically changed in accordance with scheduled purposes.

0 243 782

# F I G. 1

## PRIOR ART

# F I G. 3

UNIT TO BE CONTROLLED

COMPUTER

UNIT TO BE CONTROLLED

SIGNAL TRANSMISSION UNIT

# F I G. 2
## PRIOR ART

# F I G. 4

SCREEN NO.5

| SCREW DOWN | S/G | SPEED | LOOPER | SPRAY |
|---|---|---|---|---|
| 2-NOTCH ASCENT | 2-NOTCH OPEN | ACCEL-ERAITON | | DIS-CHARGE |
| 1-NOTCH ASCENT | 1-NOTCH OPEN | DECEL-ERATION | UPWARD | STOP |
| STOP | STOP | HOLD | STOP | |
| 1-NOTCH DESCENT | 1-NOTCH OPEN | STOP | DOWN-WARD | |
| 2-NOTCH DESCENT | 2-NOTCH OPEN | START | | |

FIG. 5

START

THE FIRST MODE ? — NO
YES

"O" INPUTTED ? — NO
YES

NEXT KEY INPUT PRESENT? — NO
YES

DETERMINE THE INPUTTED KEY AS COLUMN NUMBER

NEXT KEY INPUT PRESENT? — NO
YES

SCROLL A COLUMN BETWEEN THE FIRST KEY AND THE SECOND KEY

SCROLL A CHARACTER IN THE COLUMN NUMBER UPWARDS — YES — "↑" INPUTTED ?
NO

SCROLL A CHARACTER IN THE COLUMN NUMBER DOWNWARDS — YES — "↓" INPUTTED ?
NO

RIGHTWARD SCROLL — YES — "→" INPUTTED ?
NO

LEFTWARD SCROLL — YES — "←" INPUTTED ?
NO

THE FIRST KEY IDENTICAL WITH THE SECOND KEY ? — YES
NO

END

CHARACTER INFORMATION MEMORY

| | |
|---|---|
| 100 | SCREW DOWN |
| 105 | 2-NOTCH ASCENT |
| 110 | ONE-NOTCH ASCENT |
| 115 | STOP |
| 120 | ONE-NOTCH DESCENT |
| 125 | 2-NOTCH DESCENT |
| 130 | S / G |
| 135 | 2-NOTCH OPEN |
| 140 | ONE-NOTCH OPEN |
| 145 | STOP |
| 150 | ONE-NOTCH CLOSE |
| 155 | 2-NOTCH CLOSE |
| ⋮ | ⋮ |
| 1C0 | SPRAY |
| 1C5 | DISCHARGE |
| 1D0 | STOP |
| 1D5 | |
| 1E0 | |
| 1E5 | |
| 1F0 | |

# F I G. 6

COLUMN →

22

ROW ↓

ⓐ "1" "1"

ⓑ "1" "2"

ⓒ "1" "3"

ⓓ "1" "5"

ⓔ "0" "3" "5"

# F I G. 7

```
                    ( START )
                        │
                        ▼
                  ╱──────────╲        NO
                 ╱  THE        ╲──────────────▶
                 ╲  SECOND MODE ╱
                  ╲    ?      ╱
                   ╲────────╱
                     │ YES
                     ▼
                  ╱──────────╲        NO
                 ╱  "O"        ╲──────────────▶
                 ╲  INPUTTED   ╱
                  ╲    ?      ╱
                   ╲────────╱
                     │ YES
                     ▼
                  ╱──────────╲        NO
                 ╱  NEXT       ╲──────────────▶
                 ╲  KEY INPUT  ╱
                  ╲ PRESENT ? ╱
                   ╲────────╱
                     │ YES
                     ▼
          ┌────────────────────────┐
          │ DETERMINATION          │
          │ OF COLUMN NUMBER       │
          │ AND RECOGNITION        │
          └────────────────────────┘
                     │
                     ▼
                  ╱──────────╲        NO
                 ╱  NEXT       ╲──────────────▶
                 ╲  KEY INPUT  ╱
                  ╲ PRESENT ? ╱
                   ╲────────╱
                     │ YES
                     ▼
          ┌────────────────────────┐
          │ DETERMINATION          │
          │ OF ROW NUMBER          │
          │ AND RECOGNITION        │
          └────────────────────────┘
                     │
                     ▼
                  ╱──────────╲        NO
                 ╱  THE        ╲──────────────▶
                 ╲ THIRD KEY   ╱
                  ╲INPUT PRE-  ╱
                   ╲ SENT ?  ╱
                   ╲────────╱
                     │ YES
                     ▼
          ┌────────────────────────┐
          │ DETERMINATION OF       │
          │ ADDRESS ON CHARAC-     │
          │ TER INFORMATION        │
          │ MEMORY AND RECOGNITION │
          └────────────────────────┘
                     │
                     ▼
          ┌────────────────────────┐
          │ DISPLAY A CHARACTER    │
          │ OF A CHARACTER         │
          │ INFORMATION ADDRESS    │
          │ ON RECOGNIZED MATRIX   │
          │ TO PROVIDE A FUNCTION  │
          └────────────────────────┘
                     │
                     ▼
                  ( END )
```

# F I G. 8A

# F I G. 8B

**START**

↓

**THE THIRD MODE ?** — NO →

↓ YES

**KEY INPUT PRESENT ?** — NO →

↓ YES

**STORE KEYED-IN NUMERAL**

↓

**"IN" INPUT PRESENT ?** — NO →

↓ YES

**CHANGE TO A SCREEN NUMBER OF THE STORED NUMERAL**

↓

**END**

**FOR ONE MAN OPERATION ?** — NO →

↓ YES

**SELECT A CHANGE SCREEN NUMBER IN ACCORDENCE WITH AUTOMATING CONDITIONS**

## (A) CHARACTER INFORMATION MEMORY

| | |
|---|---|
| 100 | SCREW DOWN |
| 105 | 2-NOTCH ASCENT |
| | |
| | SPRAY |
| | DISCHARGE |
| | STOP |
| | |
| | |
| | |

SCREEN NO.1

## (B)

| | |
|---|---|
| 200 | LOOPER |
| 205 | UPWARD |
| | |
| | SCREW DOWN |
| | 2-NOTCH ASCENT |
| | |

SCREEN NO. 2

## (C)

| | |
|---|---|
| 300 | COLD WATER |
| 305 | DISCHARGE |
| | STOP |
| | |
| | LOOPER |
| | UPWARD |
| | |

SCREEN NO. 9

# F I G. 9

COARSE MILL

DOWN
COILER

FINISHING
MILL

CROP
SHEAR

11